(19) Europäisches Patentamt
European Patent Office
Office européen des brevets

(11) Publication number: **0 138 227**
**A2**

(12) # EUROPEAN PATENT APPLICATION

(21) Application number: **84112480.3**

(22) Date of filing: **16.10.84**

(51) Int. Cl.⁴: **C 08 G 18/76**, C 08 G 18/66

(30) Priority: **17.10.83 US 542799**

(43) Date of publication of application: **24.04.85**
**Bulletin 85/17**

(84) Designated Contracting States: **BE DE FR GB IT NL**

(71) Applicant: **The B.F. GOODRICH Company,**
**Dept. 0015 WHB-6 500 South Main Street, Akron, Ohio 44318 (US)**

(72) Inventor: **Ondercin, Lawrence, 6022 Alvin Drive, Brookpark Ohio 44142 (US)**

(74) Representative: **von Kreisler, Alek, Dipl.-Chem. et al, Deichmannhaus am Hauptbahnhof, D-5000 Köln 1 (DE)**

(54) **Ultraviolet resistant thermoplastic polyurethanes.**

(57) Novel and improved thermoplastic polyurethanes having an excellent balance of physical properties and improved resistance to ultraviolet degradation are prepared by reacting together a macropolyol including hydroxyl terminated polyesters, polyethers, polycarbonates, polylactones, polyhydrocarbons, and polyepihalohydrins, a diol such as the glycols containing 2 to 10 carbon atoms and p-tetramethyl xylene diisocyanate.

EP 0 138 227 A2

# ULTRAVIOLET RESISTANT THERMOPLASTIC POLYURETHANES

## BACKGROUND OF THE INVENTION

Thermoplastic polyurethanes having a wide range of physical properties are known that have many applications. A particularly valuable class of these polyurethanes are prepared from higher molecular weight polyols and low molecular or short chain diols reacted with aromatic diisocyanates such as naphthalene-1,5-diisocyanate, diphenylmethane-4,4'-diisocyanate, tolylene diisocyanate, p-phenylene diisocyanate, and the like. While polyurethanes so made have many excellent physical properties, these aromatic diisocyanates are expensive and the resulting polyurethanes do not have the desired degree of resistance to attack and discoloration by ultraviolet radiation for many applications.

## SUMMARY OF THE INVENTION

Novel and improved thermoplastic polyurethanes having an excellent balance of physical properties and improved resistance to ultraviolet degradation and discolorations are prepared by reacting together a macropolyol including hydroxyl terminated polyesters, polyethers and polycarbonates, a diol such as the glycols containing 2 to 10 carbon atoms, and p-tetramethyl xylene diisocyanate.

## DETAILED DESCRIPTION

The thermoplastic polyurethanes are readily prepared from a variety of compounds having terminal functional groups reactive with the isocyanates, including hydroxyl terminated polyesters, polylactones,

polyethers, polycarbonates, polyhydrocarbons, polyepihalohydrins and the like. Normally used are hydroxyl-terminated compounds having molecular weights greater than about 300 to 400 to 10,000. The most commonly used compounds or macropolyols are hydroxyl-terminated polyesters, polyethers, polyacetals, poly-carbonates, polyepihalohydrins, polybutadienes and polyacrylates, alone or in admixture, having molecular weights greater than about 400, with polyfunctional chain extenders such as the diols. Useful materials are obtained from mixtures of a macroglycol and a small polyfunctional polyol chain extender such as an alkylene glycol or ether glycol, a cycloaliphatic glycol, or an aromatic-aliphatic glycol, and the like. In the so-called prepolymer technique an excess of organic diisocyanate is first reacted with the marcoglycol and unsaturated polyester or polyether and then the small difunctional chain extender added, normally in amounts equivalent to react with substantially all of the free isocyanate group.

The hydroxyl (polyalkylene oxide), or polyether macroglycols, preferably are essentially linear hydroxyl-terminated compounds having ether linkages as the major linkage joining carbon atoms. The molecular weights may vary between about 400 and 10,000, usually to about 2,000. The hydroxyl (polyalkylene oxide)s as hydroxyl poly (tetramethylene oxide), hydroxyl poly (trimethylene oxide), hydroxyl poly (hexamethylene oxide), hydroxyl poly (ethylene oxide) and the like of the formula $HO[(CH_2)_nO]_xH$ wherein n is a number from 2 to 6 and x is an integer, and alkyl substituted types such as hydroxyl poly(1,2-propylene oxide); tetrahydrofuran and ethylene oxide co-polyethers; and the like.

The polyester glycols include linear hydroxyl-terminated polyesters having molecular weights between about 400 and 10,000, usually about 2,000. The polyesters utilized include those prepared by the polyesterification of aliphatic dicarboxylic acids including, for example, malonic, adipic, succinic, pimelic, suberic, azelic, sebacic and the like or their anhydrides. Aromatic dicarboxylic acids of the formula HOOC-R-COOH where R is an alkylene radical containing 1 to 10 carbon atoms, preferably 4 to 6 carbon atoms. The phthalic acids are also useful. The glycols used in the preparation of the polyesters by reaction with the dicarboxylic acids are normally aliphatic polyols containing between 2 and 10 carbon atoms, usually 2 to 6 carbon atoms, such as ethylene glycol, propanediol, butanediol, hexamethylene glycol, decamethylene glycol, 2-ethylhexanediol-1,6, neopentyl glycol and the like; 1,4-cyclohexanedimethanol; and aromatic polyols or bis-1,4(β -hydroxyethoxy) benzene. Poly-esteramides also are contemplated, usually obtained by substitution of a diamine or amino alcohol for at least part of the glycol.

Poly(epsilon-caprolactone)diols are the polyester reaction products of epsilon-caprolactones whose polymerization has been initiated by bifunctional compounds having two active hydrogen sites that are capable of opening the lactone ring and initiating polymerization of the lactone. These bifunctional materials may be represented by the formula HX-R-XH wherein R is an organic radical which can be aliphatic, cycloaliphatic, aromatic or heterocyclic and X is O, NH and NR where R is a hydrocarbon radical which can be alkyl, aryl, aralkyl and cycloalkyl. Such materials include

diols, diamines and aminoalcohols preferably. Useful diols include alkylene glycols wherein the alkylene group contains 2 to 10 carbon atoms for example, ethylene glycol, 1,2-propane diol, butanediol-1,4, hexamethylene glycol and the like. Ethylene glycol provides excellent polyesters.

The lactones preferred for preparing the polyesters are epsilon-caprolactones having the general formula

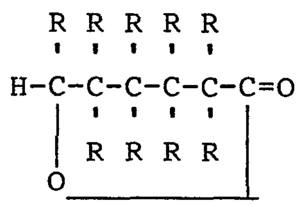

wherein at least 6 of the R's are hydrogen and the remainder are hydrogen or alkyl groups containing 1 to 10 carbon atoms, preferably methyl. Mixtures of lactones may be employed to form the polyesters as epsiloncaprolactone and trimethyl-epsilon-caprolactone, α-methyl-epsilon-caprolactone, β-methyl-epsiloncaprolactone, dimethyl-epsilon-caprolactone, and the like. The lactones are polymerized readily be heating with the bifunctional reactant to a temperature of about 100 to about 200°C. Catalysts may be employed if desired. Particularly preferred are poly(epsilon-caprolactone)diols having molecular weights in the range of about 400 to about 10,000, normally to about 2,000.

Polyacetals are generally prepared by the reaction of an aldehyde and a polyhydric alcohol with an excess of the alcohol, including for example, reaction products of aldehydes such as formaldehyde, paraldehyde, propionaldehyde, butyraldehyde, valeraldehyde, acrolein and the like reacted with glycols; for example, ethylene glycol, hexanediol, diethylene glycol and the like which are well known to those skilled in the art. Generally, the polyacetals may be considered to be reaction products of aldehydes and glycols. The molecular weights of the polyacetal will be varied from about 400 to 10,000, normally about 2,000.

Typical polyhydrocarbonurethanes useful in the practice of the invention will include hydroxyl-terminated liquid polymers having an aliphatic polymeric backbone prepared by polymerizing at least one vinylidene monomer having at least one terminal $CH_2$< group per monomer molecule together with at least one hydroxyl containing disulfide as is described in U.S. Patent 4,120,766. Such liquid polymers may have a backbone derived from, for example, ethylene, isobutylene, butadiene, acrylate and methacrylate esters alone or with other vinylidene monomers such as styrene or acrylonitrile as is described in the aforementioned patent. Other methods for making hydroxyl containing liquid polymers are well known such as reacting an aminoalcohol with a liquid carboxyl terminated polymer having backbones of the type disclosed above. The molecular weight of these materials will range from about 400 to 5,000.

The polycarbonate glycols include reaction products of polyols and phosgene or organic carbonate compounds. Of the polyols, poly(oxyalkylene glycol)s may have the general formula $HO(R'O)_xH$ wherein R is an alkylene radical containing 2 to 10 carbon atoms and x is an integer, typically from 1 to 5. The alkylene glycols normally contain 2 to 10 carbon atoms. Typical materials include, for example, ethylene glycol, 1,4-butanediol, 1,6-hexanediol, diethylene glycol, 1,2-propylene glycol, dipropylene glycol, 2-ethyl-1,6-hexanediol, 1,5-pentanediol, 1,4-cyclohexanediol, 1,2,6-hexanetriol, polyoxyethylene glycols and triols, polyoxypropylene glycols and the like. The organic carbonates may have the formula

$$RO\overset{O}{\overset{\|}{C}}OR$$

wherein the R's are alkyl radical containing 1 to 8 carbon atoms, and cyclic radicals containing 6 to 10 carbon atoms in the ring. Typical compounds include dimethyl carbonate, diethyl carbonate, dipropyl carbonate, diphenyl carbonate, dicyclohexyl carbonate, and the like. Polyurethanes of this invention made with poly(hexamethylene carbonate) glycol have good properties.

Small diols are used as chain extenders with the macropolyols and the p-tetramethylxylenediisocyanate. These diols normally are aliphatic glycols or ether glycols containing 2 to 10 carbon atoms. Typical glycols which have been employed include ethylene glycol, propylene glycol, hexanediol, 2-ethylhexanediol-1,6-neopentyl glycol, 1,4-butenediol, 2-butene-1,4-diol, and the like. Cycloaliphatic glycols such as cyclohexanedimethanol, and aromatic-aliphatic glycols such as bis-1,4-($\beta$-hydroxyethoxy)benzene, may also be employed.

The amount of glycol chain extender used with the macropolyol and the diisocyanate may vary from about 0.1 to 10 mols per mol of macroglycol. Excellent polyurethanes are obtained with a molar ratio of one mol of macropolyol and 1 to 5 mols of the small chain extender glycol. Substituted glycols also may be used.

About equimolar ratios of diisocyanate and

total polyols, i.e., -OH to -NCO groups, may be used. When a small polyol chain extender is used, the ratio of reactants employed may be varied from about 1.5 to 13 mols of diisocyanate per mol of macropolyol with 0.5 to 12 mols of the polyol. The amount of diisocyanate used is dependent on the total amount of chain extender and macropolyol, and normally is a molar amount essentially equivalent to the total of these latter reactants so that there are essentially no free unreacted isocyanate groups remaining in the polymer after polymerization. Excellent polyurethanes have been obtained when a molar ratio of one mol of macropolyol, 0.1 to 3 mols of diol chain extender and 1.1 to 4 mols of the diisocyanate are caused to react. While essentially equimolar amounts of isocyanate and active hydrogen groups are often preferred, it will be understood that small excesses of a reactant or excess organic diisocyanate can be used in forming prepolymers. Normally, there should be less than 0.005 percent by weight of unreacted isocyanate groups, preferably essentially no residual isocyanate groups, in the polyurethanes.

Catalysts may be used to speed up the polyurethane formulations and any of those catalysts normally used by those skilled in the art may be employed. Typical catalysts include dibutylin dilaurate, stannous octoate, tertiary amines such as triethylamine and the like may be used, normally in amounts from about greater than 0.01 up to 10 phr of polyurethane, and more normally greater than about 0.025 up to 5 phr.

In the following Examples, illustrating the practice of the invention, a mixture of the macropolyol and chain extender diol were heated to about 100°C to 150°C to melt the 2 polyols. The anti-oxidant and ultraviolet stabilizers, catalyst and processing aid, if used, were added to the melted macropolyol-chain extender mixture. The para-tetramethyl xylene diisocyanate heated to about 100°C to 150°C was added to this mixture. Polymerization was rapid and exothermal. As the polymerization continues, a polymer melt was formed and the temperature of the reaction mixture reached and was maintained at about 210°C to 235°C for 3 to 5 minutes. The polymeric reaction products were allowed to cool at room temperature and then tested. The reactions were conducted in the substantial absence of moisture under vacuum or dry nitrogen.

ASTM test procedures were used as follows, ultimate tensile strength, ultimate elongation, 100% modulus, and 300% modulus, D-412; Shore hardness, A and D, D-2240; Vicat softening point, D-1525(B); and Fadeometer exposure to test for ultraviolet resistance, D-1449 and G-23.

## EXAMPLE I

One mole (1000 grams) of poly(tetramethylene adipate)glycol, molecular weight 1000, was blended with 0.96 moles (86.1 grams) of 1,4-butanediol. To this mixture was added 7.8 grams of Wingstay L, a polymeric hindered phenolic anti-oxidant (butylated reaction product of p-cresol and dicyclopentadiene), 7.8 grams of 2(2'-hydroxy-3',5'-di-tert-amylphenyl)benzotriazole, 3.9 grams of bis(2,2,6,6-tetramethyl-4-piperidinyl)sebacate, and .54 grams (500 ppm) of the catalyst, stannous octoate. This mixture was then mixed with 1.96 moles (478.1 grams) of para-tetramethyl xylene diisocyanate, in accordance with the procedure described above.

EXAMPLE II

One mole (1000 grams) of poly(tetramethylene adipate)glycol, molecular weight 1000, was blended with 1.81 moles (162.8 grams) of 1,4-butanediol. To this mixture was added 9.2 grams of Wingstay L, a polymeric hindered phenol anti-oxidant (butylated reaction product of p-cresol and dicyclopentadiene), 9.2 grams of 2(2'-hydroxy-3',5'-di-tert-amylphenyl)benzotriazole, 4.6 grams of bis(2,2,6,6-tetramethyl-4-piperidinyl)sebacate, and 5.8 grams (500 ppm) of stannous octoate. This mixture was then polymerized with 2.81 moles (686.2 grams) of para-tetramethyl xylene diisocyanate.

EXAMPLE III

One mole (2000 grams) of poly(hexamethylene carbonate)glycol, molecular weight 2000, was blended with 2.41 moles (217.0 grams) of 1,4-butanediol. To this mixture was added 15.2 grams of Wingstay L, a polymeric hindered phenol anti-oxidant (butylated reaction product of p-cresol and dicyclopentadiene), 15.2 grams of 2(2-hydroxy-3',5'-di-tert-amylphenyl)benzotriazole, and 7.6 grams of bis(2,2,6,6-tetramethyl-4-piperidinyl)sebacate, 22.9 grams of a lubricant, N,N'-ethylene bis(stearamide), and 1.11 grams (500 ppm) stannous octoate. This mixture was then polymerized with 3.41 moles (833.2 grams) of para-tetramethyl xylene diisocyanate.

EXAMPLE IV

One mole (1000 grams) of poly(hexamethylene carbonate)glycol, molecular weight 1000, was blended with 1.22 moles (109.8 grams) of 1,4-butanediol. To this mixture was added 8.3 grams of Wingstay L, a

polymeric hindered phenol anti-oxidant (butylated reaction product of p-cresol and dicyclopentadiene), 8.3 grams of 2(2'-hydroxy-3',5'-di-tert-amylphenyl)benzotriazole, and 4.1 grams of bis(2,2,6,6-tetramethyl-4-piperidinyl)sebacate, 12.4 grams of lubricant, N,N'-ethylene bis(stearamide), and 0.55 grams (500 ppm) stannous octoate. This mixture was then polymerized with 2.22 moles (542.2 grams) of para-tetramethyl xylene diisocyanate.

The physcial properties of the resulting polyurethanes are set forth in the Table.

TABLE

| EXAMPLE | I | II | III | IV |
|---|---|---|---|---|
| Original Properties | | | | |
| Ultimate Tensile Strength, psi/kPa | 1350/9310 | 2120/14620 | 1500/10340 | 1880/12970 |
| Ultimate Elongation, % | 570 | 270 | 120 | 490 |
| 100% Modulus, psi/kPa | 1125/7760 | 2030/14000 | 1430/9860 | 1300/8970 |
| 300% Modulus, psi/kPa | 1175/8100 | -- | -- | 1560/10760 |
| Shore Hardness, A/D | 92/44 | 93/57 | 90/45 | 91/46 |
| Reflectance, photovolt | 64 | 60 | 62 | 62 |
| Vicat Softening Point, °C/°F | 89/192 | 120/248 | 81/177 | 81/177 |
| After 500 hours in Fadeometer | | | | |
| Ultimate Tensile Strength, psi/kPa | 2100/14480 | 2775/19140 | 2200/15170 | 2400/16550 |
| Ultimate Elongation, % | 520 | 340 | 240 | 400 |
| 100% Modulus, psi/kPa | 1275/8790 | 1700/11720 | 1700/11720 | 1700/11720 |
| 300% Modulus, psi/kPa | 1500/10340 | -- | -- | 2200/15170 |
| Shore Hardness, A/D | 92/47 | 92/46 | 92/46 | 92/48 |
| Reflectance, photovolt | 63 | 61 | 61 | 63 |

TABLE - CONTINUED

TABLE (Continued)

| EXAMPLE | I | II | III | IV |
|---|---|---|---|---|
| After 1000 hours in Fadeometer | | | | |
| Ultimate Tensile Strength, psi/kPa | 1800/12410 | 3350/23100 | 2150/14830 | 2400/16550 |
| Ultimate Elongation, % | 520 | 420 | 220 | 400 |
| 100% Modulus, psi/kPa | 1325/9140 | 2400/16550 | 1750/12070 | 1700/11720 |
| 300% Modulus, psi/kPa | 1500/10340 | 2800/19310 | -- | 2200/15170 |
| Shore Hardness, A/D | 91/46 | 94/59 | 91/43 | 92/48 |
| Reflectance, photovolt | 63 | 59 | 61 | 61 |

These polyurethanes have excellent balance of desirable physical properties. The data also show the resistance to degradation of these novel polyurethanes by ultraviolet. Notable is the lack of discoloration, yellowing, shown by the essentially constant reflectance values after 1000 hours in the Fadeometer. In thin film particularly, these novel materials remain clear even after long exposure to light. In contrast, a similar polyurethane made with an aromatic diisocyanate, diphenylmethane-4,4'-diisocyanate showed a decrease in reflectance values from 75 to 33 after only 100 hours of Fadeometer exposure.

The ultraviolet resistant thermoplastic polyurethanes of this invention find many uses where articles of polyurethanes are exposed to ultraviolet radiation, such as molded automotive exterior parts, in film and coatings exposed to sunlight, as in automotive windshield glass lamination, identification tags, extruded shapes and moldings, and the like.

## CLAIMS

1. Ultraviolet resistant thermoplastic polyurethanes comprising the reaction product of hydroxyl-terminated macropolyol polyesters, polyethers, or polycarbonates, having molecular weights greater than 400 to 10,000, glycols containing 2 to 10 carbon atoms and tetramethyl xylene diisocyanate.

2. Polyurethanes of Claim 1 wherein the hydroxyl-terminated macropolyols have molecular weights from about 800 to about 3000, and the glycols are aliphatic glycols and aliphatic ether glycols containing 4 to 6 carbon atoms.

3. Polyurethanes of Claim 2 wherein the ratio of reactants is 1 mole of macropolyol, 0.5 to 12 moles of glycol and 1.5 to 13 moles of p-tetramethylxylene diisocyanate in about a 1:1 mole ratio of hydroxyl to isocyanate groups.

4. Polyurethanes of Claim 3 wherein the hydroxyl(polyalkylene oxides) have the formula $HO[(CH_2)_nO]_xH$ wherein n is a number from 2 to 6 and x is an integer and the molecular weights from about 1500 to about 2500.

5. Polyurethanes of Claim 3 wherein the polyesters are polyesters of aliphatic carboxylic acids having the formula HOOC-R-COOH wherein R is an alkylidene radical containing 4 to 6 carbon atoms and aliphatic glycols containing 2 to 6 carbon atoms, and molecular weights from about 1500 to about 2500.

6. Polyurethanes of Claim 4 wherein the hydroxyl polycarbonates have molecular weights from about 800 to about 1500.

7. A polyurethane of Claim 5 wherein the polyester is poly(tetramethylene adipate)glycol having a molecular weight of about 1000, the glycol is 1,4-butanediol and the molar ratio of reactants is 1 mole of polyester, 1 to 3 moles of 1,4-butanediol and 2 to 4 moles of diisocyanate.

8. A polyurethane of Claim 6 wherein the polycarbonate is poly(hexamethylene carbonate)glycol, having a molecular weight of about 2000, the glycol is 1,4-butanediol and the molar ratio of reactants is 1 mole of polycarbonate, 1 to 4 moles of 1,4-butanediol and 2 to 5 moles of diisocyanate.